# EUROPÄISCHE PATENTSCHRIFT

(11) **EP 1 336 462 B1**
(45) Veröffentlichungstag und Bekanntmachung des Hinweises auf die Patenterteilung: **17.03.2010**
(21) Anmeldenummer: 03000715.7
(22) Anmeldetag: 13.01.2003
(51) Int. Cl.: B29C 44/06, B29C 44/04

(54) **Verfahren zur Herstellung eines thermoplastischen Schichtbauteils**
Method of making a thermoplastic layered structural member
Procédé de production d'un élément de structure laminée

(30) Priorität: 16.02.2002 DE 10206501
(43) Veröffentlichungstag der Anmeldung: 20.08.2003
(73) Patentinhaber: Bayerische Motoren Werke Aktiengesellschaft, 80809 München (DE)
(72) Erfinder: Conze, Michael, 84034 Landshut (DE)

(56) Entgegenhaltungen:
- EP-A- 1 157 819
- WO-A-99/50341
- US-A- 3 400 183
- US-A- 5 128 202
- US-B1- 6 251 318

## Beschreibung

Die vorliegende Erfindung betrifft ein Verfahren zur Herstellung eines thermoplastischen, durch Spritzgießen hergestellten, geschäumten Schichtbauteils, umfassend einen Schaumkörper und eine mit diesem verbundene Folie, gemäss dem Oberbegriff des Anspruchs 1.

Um weiche Bauteile mit einer besonderen optischen und/oder haptischen Oberfläche für den Innen- oder Außenbereich von Kraftfahrzeugen zur Verfügung zu stellen, ist bekannt, eine die Bauteiloberfläche bildende Folie mit einer thermoplastischen Schaumschicht zu verbinden.

Beispielsweise werden die Folie und der Schaumkörper im sog. Mono-Sandwichverfahren oder im Mehrkanal-Sandwichwerkzeug hergestellt, wobei die Schmelzen in zwei getrennten Heißkanalsystemen an der Sandwichdüse zusammengeführt werden. Ein entsprechendes Verfahren ist in der DE 100 13 627 A1 beschrieben, gemäß der ein geschäumter Körper zusammen mit Haut erzeugt wird.

Ebenso ist es möglich, zur Erzeugung eines derartigen Bauteiles eine die Oberfläche bildende Folie in ein Spritzgießwerkzeug einzulegen, wobei die Folie mit ihrer Außenseite an einer der Werkzeughälften anliegt und mit einem thermoplastischen Schaumwerkstoff zu hinterspritzen. Ein solches Verfahren ist beispielsweise in der US-A-5 785 910 offenbart. Gemäß einer besonderen Weiterbildung diese Verfahrens wird eine gasbeladene Schmelze in die zwischen den geschlossenen Formhälften des Spritzgießwerkzeuges gebildete Kavität eingespritzt, bis das Volumen gefüllt ist, nachfolgend werden die Formhälften des Spritzgießwerkzeuges um einen definierten Betrag geöffnet, so dass sich aufgrund der Volumenerhöhung/Druckabsenkung Gasblasen bilden und ein Aufschäumen stattfindet. Bedingt durch die von der Temperaturverteilung abhängigen Viskositätsunterschiede - die Schmelze kühlt am Bauteilrand schneller ab, als im Kern - bilden sich im Bauteilkern große Gasblasen, zum Rand hin nimmt der Durchmesser der Gasblasen ab, wodurch eine Randschicht mit erhöhter Festigkeit ohne nennenswerte Gasblasenbildung entsteht.

Derartige Bauteile weisen nachteiliger Weise eine sehr große Verzugsneigung auf, da in der Folie bzw. im Schaumkörper in der Regel sehr unterschiedliche Spannungen vorherrschen. Nur mit großem Aufwand kann dem entgegengewirkt werden, indem beispielsweise sehr komplizierte Angussformen und Angusslagen gewählt werden. Zudem ist es regelmäßig erforderlich, wie in der DE 100 13 627 A1 gezeigte Einleger zur Stabilisierung vorzusehen, mit denen der Schaum-/Folienverbund fest verbunden ist. Besonders nachteilig sind dabei insbesondere der gesteigerte Herstellungsaufwand, der hohe Materialaufwand, das hohe Bauteilgewicht sowie die hohen Kosten, so dass sich insgesamt ein sehr ungünstiges Verhältnis von Bauteilsteifigkeit zu Materialeinsatz/Gewicht ergibt.

Aufgabe der vorliegenden Erfindung ist es, ein eingangs genanntes Schichtbauteil bereitzustellen, welches keine oder nur eine geringe

Verzugsneigung aufweist und sich dabei durch ein geringes Gewicht bei gleichzeitig besonders hoher Steifigkeit auszeichnet; das Bauteil soll mit geringem Aufwand herstellbar sein und einen nur geringen Materialeinsatz erfordern, so dass die Kosten niedrig gehalten werden.

Die Lösung der Aufgabe erfolgt durch ein Verfahren mit den im Anspruch 1 angegebenen Merkmalen, wobei der zugrundeliegende Gedanke die Verbindung einer Folie mit einem Schaumkörper beinhaltet, deren Dicke insbesondere bezüglich des abgeführten Wärmestromes auf die Randschicht des Schaumkörpers abgestimmt ist.

Besonders zu bevorzugen ist es, wenn der über die Folie abgeführte Wärmestrom zumindest annähernd dem über die Randschicht abgeführten Wärmestrom entspricht, so dass bereits beim Abkühlvorgang im Spritzgießwerkzeug idealer Weise allseitig eine gleichmäßige Wärmeabfuhr erzielt wird und so schon im Ansatz einem Bauteilverzug vorgebeugt ist.

Zweckmäßiger Weise weist die Randschicht des Schaumkörpers eine Dicke von 0,1 bis 0,8, insbesondere von 0,3 bis 0,5 mm auf; in dieser Schicht sind zumindest nur wenige/kleine Gasblasen enthalten, wodurch eine erhöhte Steifigkeit in diesem Bereich erreicht wird. Die Folie weist vorteilhafter Weise eine Dicke auf, welche zumindest annähernd der Dicke der Randschicht des Schaumkörpers entspricht.

Als besonders günstig hat sich herausgestellt, wenn im Rahmen der vorliegenden Erfindung eine Lackfolie mit Schaumwerkstoff hinterspritzt wird.

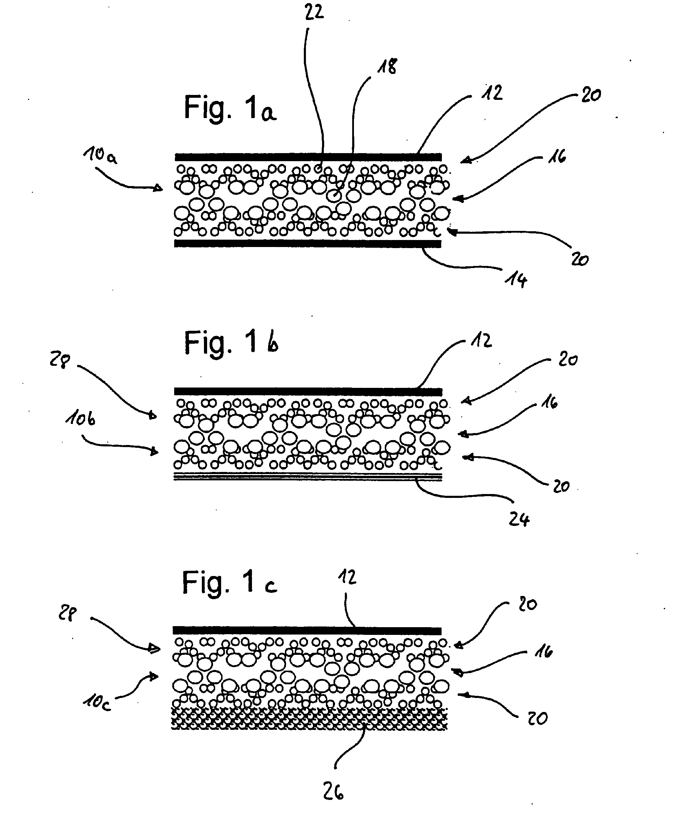

Nachfolgend sind besonders bevorzugte Ausführungsbeispiele der Erfindung unter Bezugnahme auf Figuren dargestellt, dabei zeigen
- Figur 1a: einen Schnitt durch ein Bauteil mit typischer Schaumblasenverteilung,
- Figur: 1b einen Schnitt durch eine schaumhinterspritzte Kunststofffolie sowie
- Figur 1c: einen Schnitt durch eine schaumhinterspritzte Schaumfolie.

Figur 1 zeigt einen Schnitt durch ein geschäumtes Bauteil 10a mit einer eingefrorenen Randschicht 12, 14, zur dessen Herstellung in einen zwischen den Formhälften eines hier nicht näher gezeigten Spritzgießwerkzeuges gebildeten Formraum ein schmelzflüssiger thermoplastischer gasbeladener Schaumkunststoff eingespritzt wird, bis das Volumen vollständig gefüllt ist. Aufgrund der im Vergleich zur Temperatur der Schmelze niedrigeren Temperatur des Spritzgießwerkzeuges bildet sich an der Werkzeugwand eine dünne Randschicht 12, 14, welche unter normalen Bedingungen auch nicht wieder aufschmilzt, so dass in diesem Bereich - das Gas ist im Wesentlichen in der Schmelze gelöst - eine zumindest annähernd Gasblasenfreie Außenschicht entsteht.

Im weiteren Herstellungsverlauf werden die Werkzeughälften definiert um einen vorbestimmten Betrag geöffnet, wodurch das zwischen den Formhälften gebildete Volumen vergrößert bzw. der Druck gesenkt wird. In der Folge schäumt der Werkstoff unter Gasblasenbildung auf, dabei bilden sich abhängig von der Viskosität der Schmelze, die bedingt durch die Temperaturverteilung im Bauteil in der Mitte am höchsten und zum Bauteilrand hin abnehmend ist, im Kernbereich 16 größere Gasblasen 18 und zum Rand 20 hin Gasblasen 22 abnehmender Größe; entsprechend weist das erstarrte Bauteil 10a eine auf den Randbereich 12, 14, 20 des Bauteiles konzentrierte Masseverteilung auf, wodurch insbesondere in Hinblick auf die eingesetzte Werkstoffmenge ein sehr hohes Widerstandsmoment bezüglich Biegung und Torsion erreicht wird.

Die Randschicht (12, 14) des Schaumkörpers (28) weist eine Dicke von 0,1 bis 0,8, insbesondere von 0,3 bis 0,5 mm auf, wobei die Dicke selbstverständlich von der Erstarrungsgeschwindigkeit der eingespritzten Schmelze abhängt - beispielsweise bedingt eine große Temperaturdifferenz zwischen Werkzeug und Schmelze eine dickere Randschicht (12, 14) ohne wesentliche Gasblaseneinschlüsse und eine geringere Temperaturdifferenz eine dünnere Randschicht (12, 14); die Dicke der Randschicht (12, 14) über das Bauteil 10a ist zumindest annähernd konstant.

Ein Bauteil 10b mit einem Schaumkörper 28 und einer mit ihm verbundenen Folie 24 ist in Figur 1b dargestellt. Zur Herstellung wird eine Folie 24 - vorliegend eine Lackfolie - zwischen die geöffneten Formhälften eines hier nicht näher gezeigten Spritzgießwerkzeuges eingelegt, wobei die Folienvorderseite einer Werkzeugoberfläche anliegend zugewandt ist. Nach dem Schließen der Formhälften wird in den zwischen der einen Formhälfte des Spritzgießwerkzeuges und der anderen Formhälfte, an welcher die Folie 24 anliegt, ein schmelzflüssiger Schaumwerkstoff eingespritzt, und nachfolgend analog zu dem zur Herstellung des Bauteiles 10a beschriebenen Verfahren das Gießwerkzeug um einen definierten Betrag geöffnet, so dass wie beschrieben ein Aufschäumen stattfindet.

Wie bei dem mit der Figur 1a gezeigten Bauteil 10a bildet sich - jedoch nur einseitig auf der der Folie 24 abgewandten Seite - beim Bauteil 10b eine Randschicht 12 mit erhöhter Festigkeit ohne nennenswerte Gasblaseneinschlüsse; die Folie 24 bildet mit dem eingespritzten Schaumwerkstoff einen Verbund ohne Randschichtbildung.

Die Dicke der Folie 24 ist insbesondere bezüglich des abgeführten Wärmestromes auf die Randschicht (12) des Schaumkörpers (28) abgestimmt. Weist also die Folie 24 eine ähnliche Wärmeleitfähigkeit/kapazität, wie die Randschicht 12 auf, so wird ihre Dicke ähnlich der der Randschicht gewählt. Weist die Folie 24 eine höhere Wärmeleitfähigkeit/geringere Wärmekapazität als die Randschicht 12 auf, wird sie entsprechend dicker gewählt. Anderenfalls wird bei einer geringeren Wärmeleitfähigkeit/höheren Wärmekapazität der Folie 24 gegenüber der Randschicht 12 deren Dicke entsprechend reduziert. Auf diese Weise wird schon alleine aufgrund des Temperaturverlaufes bei der Bauteilherstellung eine besondere Verzugsarmut erreicht, indem an beiden Werkzeughälften vergleichbare Abkühlbedingungen vorliegen.

Figur 1c zeigt ein Bauteil 10c, welches durch eine hinterschäumte Schaumfolie 26 gebildet ist. Ebenso wie beim Bauteil 10b erfolgt bei der Herstellung die Bildung einer Randschicht 12 und die Verbindung des Schaumwerkstoffes mit der Schaumfolie 26. Die Lackfolie 24 oder die Schaumfolie 26 sind sinngemäß selbstverständlich durch beliebige andere hinterspritzbare Materialien ersetzbar, ohne den Bereich der der Erfindung zugrundeliegenden Idee einer vergleichbaren Wärmeabfuhr durch Abstimmung der Foliendicke auf die Dicke der Randschicht 12 zu verlassen, so dass im Rahmen der vorliegenden Unterlagen unter dem Begriff Folie durchaus auch andere nicht folienartige Kunststoffe und Dekorstoffe wie Leder, Lederersatzstoffe, Stoffe, Alcantara, Netze etc. zu verstehen sind. Gegebenenfalls betrifft die vorliegende Anordnung nur Teilbereiche eines Bauteiles.

Im Rahmen des erfinderischen Gedankens ist es weiterhin möglich, den Schaumwerkstoff im Spritzgießwerkzeug zwischen zwei die Außenfläche bildende insbesondere in Bezug auf den abführbaren Wärmestrom aufeinander abgestimmte Materialien einzuspritzen. Gemäß einer Weiterbildung werden temperierte Einlegeteile verwendet.

In besonders vorteilhafter Weise werden durch die Erfindung die Bauteilkosten bei vergleichbarer Qualität reduziert, es wird eine hohe Steifigkeit des dekorierten Bauteiles bei gleichzeitiger Materialeinsparung erreicht; aufgrund der isolierenden Wirkung der verwendeten Folie kann die mögliche Flieskanalhöhe deutlich reduziert werden. Der eingespritzte Werkstoff kann sowohl chemisch als auch physikalisch aufgeschäumt werden. Ein Triebmittel wie beispielsweise gelöstes Gas führt zu einer niedrigeren Viskosität der Schmelze, wodurch bei gleicher Anwendung der Spritzdruck sinkt. Daraus folgen ergibt sich eine geringere erforderliche Schließkraft, so dass durch den Einsatz kleinerer Maschinen weitere Einsparungen möglich sind.

## Patentansprüche

1. Verfahren zur Herstellung eines thermoplastischen Schichtbauteils (10b, 10c) mittels Spritzgießens, wobei eine Folie (24, 26) mit einem Kunststoff verbunden wird, wobei der Kunststoff einen Schaumkörper (28) bildet, der Gasblasen unterschiedlicher Ausdehnungderart aufweist, dass ausgehend vom Bauteilkern (16) in Richtungauf den Bauteilrand (20) die Gasblasenausdehnung abnimmt, so dass eine Randschicht (12) gebildet wird, **dadurch gekennzeichnet, dass** die Dicke der Folie (24, 26) hinsichtlich des abführbaren Wärmestroms auf die Randschicht (12) des Schaumkörpers (28) abgestimmt wird.

2. Verfahren gemäß Anspruch 1, **dadurch gekennzeichnet, dass** die in eine Spritzgießform eingelegte Folie (24, 26) mit dem Kunststoff hinterspritzt wird.

3. Verfahren gemäß Anspruch 1 oder 2, **dadurch gekennzeichnet, dass** die Dicke der Folie (24, 26) so abgestimmt wird, dass der über die Folie (24, 26) abführbare Wärmestrom annähernd dem über die Randschicht (12) abführbaren Wärmestrom entspricht.

4. Verfahren gemäß einem der vorhergehenden Ansprüche, **dadurch gekennzeichnet, dass** eine Randschicht (12) mit einer Dicke von 0,1 bis 0,8 mm, insbesondere von 0,3 bis 0,5 mm erzeugt wird.

5. Verfahren gemäß einem der vorhergehenden Ansprüche, **dadurch gekennzeichnet, dass** die Dicke der Folie (24, 26) entsprechend der Dicke der Randschicht (12) gewählt wird.

6. Verfahren gemäß einem der vorhergehenden Ansprüche, **gekennzeichnet durch** die Verwendung einer Lackfolie.

## Claims

1. A method of producing a thermoplastic laminated component (10b, 10c) by injection moulding, wherein a film or sheet (24, 26) is connected to a plastic, wherein the plastic forms a foam member (28) containing gas bubbles of various sizes, such that the size of the bubbles decreases from the core (16) towards the skin (20) of the component, thus forming an outer layer (12), **characterised in that** the thickness of the sheet (24, 26) is adjusted to the rate at which heat can be removed from the outer layer (12) of the foam member (28).

2. A method according to claim 1, **characterised in that** the sheet (24, 26) is inserted into an injection mould and backed with the plastic.

3. A method according to claim 1 or 2, **characterised in that** the thickness of the sheet (24, 26) is adjusted so that the rate at which heat is removable via the sheet (24, 26) is approximately equal to the rate removable via the outer layer (1 2).

4. A method according to any of the preceding claims, **characterised in that** an outer layer (12) is produced with a thickness of 0.1 to 0.8 mm, especially 0.3 to 0.5 mm.

5. A method according to any of the preceding claims, **characterised in that** the thickness of the sheet (24, 26) is chosen in accordance with the thickness of the outer layer (12).

6. A method according to any of the preceding claims, **characterised by** the use of a coat or film of paint.

## Revendications

1. Procédé de fabrication par injection d'un composant thermoplastique stratifié (10b,10c),
selon lequel
- on relie un film (24, 26) à une matière plastique,
- la matière plastique forme un composant expansé (28) ayant des bulles de gaz d'extension différente,
- partant du coeur (16) du composant, en direction du bord (20) du composant, l'expansion des bulles de gaz diminue de façon à former une couche marginale (12),
**caractérisé en ce que**
l'épaisseur du film (24, 26) est définie en fonction du flux thermique que l'on peut évacuer vers la couche marginale (12) du composant expansé (28).

2. Procédé selon la revendication 1,
**caractérisé en ce que**
le film (24, 26) placé dans le moule d'injection est revêtu sur le côté arrière par injection de matière plastique.

3. Procédé selon la revendication 1 ou 2,
**caractérisé en ce que**
l'épaisseur du film (24, 26) est déterminée pour que le flux thermique à évacuer par le film (24, 26) correspond sensiblement au flux thermique qui peut être évacué par la couche marginale (12).

4. Procédé selon les revendications précédentes,
**caractérisé en ce qu'**
on réalise une couche marginale (12) d'une épaisseur de 0,1 à 0,8 mm, notamment de 0,3 à 0,5 mm.

5. Procédé selon les revendications précédentes,
**caractérisé en ce que**
l'épaisseur du film (24, 26) est choisie en fonction de l'épaisseur de la couche marginale (12).

6. Procédé selon les revendications précédentes,
**caractérisé par**
l'utilisation d'un film vernis.
